# EUROPÄISCHE PATENTSCHRIFT

(11) **EP 2 152 072 B1**
(45) Veröffentlichungstag und Bekanntmachung des Hinweises auf die Patenterteilung: **28.06.2017**
(21) Anmeldenummer: 08759744.9
(22) Anmeldetag: 19.05.2008
(51) Int. Cl.: A01N 25/04, A01N 47/10, A01N 47/12, A01P 3/00

(54) **IODPROPARGYLVERBINDUNGEN HALTIGE DISPERSIONEN**
DISPERSIONS CONTAINING IODOPROPARGYL COMPOUNDS
DISPERSIONS CONTENANT DES COMPOSES D'IODOPROPARGYLE

(30) Priorität: 24.05.2007 DE 102007024208
(43) Veröffentlichungstag der Anmeldung: 17.02.2010
(73) Patentinhaber: LANXESS Deutschland GmbH, 50569 Köln (DE)
(72) Erfinder: UHR, Hermann, 51373 Leverkusen (DE)
(86) Internationale Anmeldenummer: PCT/EP2008/056119
(87) Internationale Veröffentlichungsnummer: WO 2008/142049

(56) Entgegenhaltungen:
- WO-A-00/57702
- WO-A-03/049543
- WO-A-2006/038019
- DE-A1- 3 116 653
- DATABASE WPI Section Ch, Week 199914 Thomson Scientific, London, GB; Class A14, AN 1999-163146 XP002489188 ASASHIGE N, ET AL: & JP 11 021205 A (MITSUI PETROCHEM IND CO LTD) 26. Januar 1999 (1999-01-26)

## Beschreibung

Die Erfindung betrifft wässrige Dispersionen von Iodpropargylverbindungen und ihre Verwendung als mikrobiozides Mittel zum Schutz von technischen Materialien.

Iodpropargylverbindungen sind bekannte Wirkstoffe, die besonders im Materialschutz dazu eingesetzt werden, technische Materialien wie Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen oder zersetzt werden können vor dem Befall, besonders durch Pilze zu schützen. Bekanntester Vertreter ist IPBC (Iodpropargylbutylcarbamat). IPBC ist kommerziell erhältlich, entweder in fester Form, aber auch in diversen Flüssigkonzentraten, die aber meist organische Lösungsmittel enthalten. Der Bedarf an Formulierungen mit keinem oder geringem VOC (volatile organic compound) ist in den letzten Jahren aber stark gestiegen. Hier bieten sich wässrige Suspensionen an. Bislang im Handel befindliche IPBC Suspensionen weisen aber eine schlechte Lagerstabilität auf, weil sie bspw. durch Kristallbildung schnell zu einem starken Anstieg der Viskosität, bei deutlich verschlechterter Verarbeitbarkeit führen. Dieses kann bei der Lagerung, besonders bei höheren Temperaturen zum Entstehen großer Kristalle führen, verbunden mit teilweise massiver Sedimentation oder Erhöhung der Viskosität.

Es sind bereits versucht worden, dieses Problem zu lösen. Dazu wurden bspw. in EP-A-1 164 850 wässrige Dispersionen beschrieben, die Iodpropargylverbindungen und partiell hydrolysierten Polyvinylalkohol enthalten und das Kristallwachstum in Formulierungen vermindern sollen.

Während es, bis auf den oben genannten Fall, mit den meisten nicht-ionischen und ionischen Tensiden nicht gelingt Iodpropargyl-haltige Suspensionen zu erhalten, die über längere Lagerzeiten, besonders bei erhöhten Temperaturen stabil sind, ist auch die in EP-A-1164850 vorgeschlagene Lösung, ohne starke Erhöhung der Viskosität, nicht realisierbar. Es bestand daher noch immer der Wunsch das Problem zu lösen.

WO 2006/038019A offenbart nicht-ionische Tensid-Aggregate enthaltend 0.001- 50 Gew.-% eines wasserunlöslichen Wirkstoffs und 0.1-80 Gew.-% eines nicht-ionischen Tensids, das bevorzugt Ethylenoxid-Propylenoxid-Blockcopolymere enthält. Eine Iodpropargylverbindung (IPBC) als wasserunlöslicher Wirkstoff wird nur in sehr geringen Mengen und nur in Kombination mit großen Mengen obiger Blockcopolymere mit geringem Molekulargewicht eingesetzt. Wird ein Blockcopolymer mit höherem Molekulargewicht eingesetzt, dann nur in Kombination mit einer sehr geringen Menge an IPBC. Mit obigem Problem der Viskositätserhöhung beschäftigt sich WO 2006/038019A nicht.

Es wurde überraschenderweise gefunden, dass man wässrige Iodpropargyl-haltige Suspensionen erhält, wenn diese wenigstens ein Block- und/oder Blockcopolymere auf Basis von Ethylen- und/oder Propylenoxid, mit einem zahlenmäßig bestimmten mittleren Molekulargewicht größer 4000 g/mol bis 30000 g/mol enthalten.

Die vorliegende Erfindung betrifft daher eine wässrige Dispersion, dadurch gekennzeichnet, dass sie
- 1 bis 60 Gew.-% einer Iodpropargylverbindung und
- 0,5 bis 10 Gew.-% wenigstens eines Block- und/oder Blockcopolymeren auf Basis von Ethylen- und/oder Propylenoxid, mit einem zahlenmäßig bestimmten mittleren Molekulargewicht größer 4000 g/mol bis 30000 g/mol aufweist. Bevorzugte Iodpropargylverbindungen sind bspw. 3-Iod-2-propynyl-propyl carbamat, 3-Iod-2-propinyl-butyl carbamat (IPBC), 3-Iod-2-propinyl m-chlorphenyl carbamat, 3-Iod-2-propinyl-phenyl carbamat, 3-Iod-2-propinyl-2,4,5-trichlorphenylether, 3-Iod-2-propinyl-4-chlorphenylformal (IPCF), Di-(3-Iod-2-propinyl)hexyl dicarbamat, 3-Iod-2-propinyl oxyethanol ethyl carbamat, 3-Iod-2-propinyl oxyethanol phenyl carbamat, 3-Iod-2-propinyl thioxo thio ethyl carbamat, 3-Iod-2-propinyl carbaminsäureester (IPC), N-Iodpropargyloxycarbonyl alanin, N-Iodpropargyloxycarbonyl alanin ethylester, 3-(3-Iodpropargyl)-benzoxazol-2-on, 3-(3-Iodpropargyl)-6-chlorbenzoxazol-2-on, 4-Chlorphenyl-3-iodpropargylformal, 3-Iod-2-propinyl-n-hexylcarbamat sowie 3-Iod-2-propinyl-cyclohexylcarbamat.

Ganz besonders bevorzugt ist 3-Iod-2-propinyl-butyl carbamat (IPBC).

Auch Mischungen davon können eingesetzt werden.

Bei den Block- und/oder Blockcopolymere auf Basis von Ethylen- und/oder Propylenoxid beträgt das Molekulargewicht größer 4000 bis 30000 Masseneinheiten. Bevorzugt liegt das Molekulargewicht bei größer 4000 bis 14000 Masseneinheiten.

Die Blockcopolymeren setzen sich bevorzugt aus Ethylenoxid- und Propylenoxideinheiten zusammen, wobei die Anzahl der jeweiligen Einheiten in einem breiten Bereich variieren kann. Unabhängig voneinander sind 10 bis 500, bevorzugt für 15 bis 400, insbesondere 20 bis 300 Einheiten Ethylenoxid- bzw. Propylenoxideinheiten enthalten.

Bevorzugt handelt es sich dabei um Blockcopolymere auf Basis von Ethylen- und Propylenoxid. Vorzugsweise kann es sich bei diesen um die Verbindungen der allgemeinen Formeln I und II handeln. 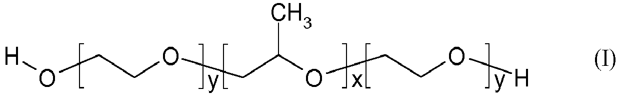 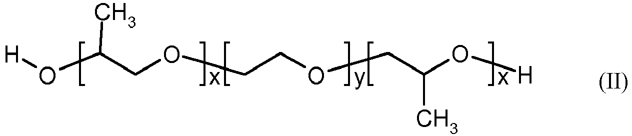 wobei
- X: für die Anzahl der Propylenoxideinheiten und y für die Anzahl der Ethylenoxideinheiten steht.

Die Block Copolymerisate der Formel (I) enthalten im Zentrum die lipophileren Propylenoxideinheiten und in der Peripherie die Ethylenoxideinheiten.

Die Block Copolymerisate der Formel (II) sind invers zu (I) und enthalten im Zentrum die Ethylenoxideinheiten und in der Peripherie die Propylenoxideinheiten.

Die Indices x und y können unabhängig voneinander in einem breiten Bereich variieren. Im Allgemeinen stehen x und y unabhängig voneinander für 10 bis 500, bevorzugt für 15 bis 400, insbesondere für 20 bis 300, wobei das sich ergebende Molekulargewicht in den oben angegebenen allgemeinen, bevorzugten oder besonders bevorzugten Bereichen bewegt.

Die erfindungsgemäß einsetzbaren Block Copolymerisate sind bekannt und kommerziell erhältlich. Beispielsweise werden sie von BASF unter dem Markennamen "Pluronic®" angeboten.

Die erfindungsgemäßen Formulierungen enthalten 1 bis 60 Gew.-% einer Iodpropargylverbindung und 0,5 bis 10 Gew.-% wenigstens eines Block- und/oder Blockcopolymeren auf Basis von Ethylen- und/oder Propylenoxid, mit einem zahlenmäßig bestimmten mittleren Molekulargewicht größer 4000 g/mol bis 30000 g/mol.

Darüber hinaus enthalten die Formulierungen gegebenenfalls noch weitere Tenside, Hilfsstoffe sowie Wirkstoffe (Fungizide, Algizide, Bakterizide und/oder Insektizide).

Als gegebenenfalls zusätzlich einsetzbare Tenside können alle Tenside oder Mischungen von Tensiden verwendet werden, die normalerweise zur Herstellung von Suspensionen verwendet werden. Beispielhaft seien hier genannt: nicht-ionogene und anionische Emulgatoren, wie Polyoxyethylen-Fettsäureester, Polyoxyethylen-Fettalkoholether, Alkylarylpolyglycolether, Alkylsulfonate, Alkylsulfate, Arylsulfonate sowie Eiweißhydrolysate.

Als weitere Hilfsstoffe können gegebenenfalls alle Hilfsstoffe verwendet werden, die auch sonst in Wirkstoffformulierungen und Dispersionen verwendet werden.

Beispielsweise handelt es sich hierbei um Benetzungsmittel, Verdickungsmittel, Entschäumer, Konservierungsmittel und Stabilisatoren.

Bevorzugt haben die Benetzungsmittel einen geringen Dampfdruck bei Raumtemperatur. Als Benetzungsmittel können alle üblicherweise in Dispersionen verwendeten Benetzungsmittel verwendet werden. Bevorzugt verwendet man Oligo- oder Polyalkylenglycole oder Triole, oder Ether der vorgenannten Verbindungen, insbesondere mit einem Molekulargewicht von kleiner 1000 g/mol. Ganz bevorzugt wird Ethylenglycol, Diethylenglycol, Triethylenglycol, Tetraethylenglycol, Polyethylenglycol, Propylenglycol, Dipropylenglycol, Polypropylenglcol, Glycerin oder Mono oder Di- Methyl, Ethyl, Propyl oder Butylether der vorgenannten Verbindungen.

Der Anteil an Benetzungsmitteln kann in einem relativ breiten Bereich variiert werden. Bevorzugt setzt man 1 bis 10 Gew.-%, insbesondere 2 bis 7 Gew.-%, bezogen auf die Dispersion ein.

Als Verdickungsmittel können prinzipiell alle Stoffe verwendet werden, dic im Wasser eine räumliche Struktur aufbauen und somit die Sedimentation verhindern oder verlangsamen können.

Bevorzugt verwendet man Polysaccharide, Xanthan Gum, Natrium oder Magnesium Silicate, Heteropolysaccharide, Alginate, Carboxymethylcellulose, Gummi arabicum oder Polyacrylsäuren. Ganz bevorzugt verwendet man Xanthan Gum. Der Anteil an Verdickungsmitteln in der erfindungsgemäßen Dispersion beträgt bevorzugt 0,1 bis 0,5 Gew.-%, insbesondere 0,3 bis 0,4 Gew.-%, bezogen auf die Dispersion.

Die erfindungsgemäßen Dispersionen weisen vorzugsweise eine Viskosität bei 20 °C von 50 bis 1000 mPas, vorzugsweise 100 bis 700 mPas, insbesondere von 100 bis 600 mPas, gemessen bei einer angelegten Scherkraft von 30 s⁻¹, auf.

Bevorzugte erfindungsgemäße Dispersionen sind weiterhin dadurch gekennzeichnet, dass sie einen volatile organic content (VOC) von kleiner 5 Gew.-%, insbesondere kleiner 1 Gew.-% besitzen. Unter VOC versteht man in diesem Zusammenhang Verbindungen mit einem Siedepunkt von < 250 °C bei Normaldruck.

Im Übrigen ist es bevorzugt, dass die erfindungsgemäße Dispersionen einen Anteil eines teilhydrolysierten Polyvinylalkohols von kleiner 1 Gew.-%, insbesondere kleiner 0,5 Gew.-%, bezogen auf die Dispersion, enthalten.

Als Entschäumer werden im Allgemeinen oberflächenaktive Verbindungen eingesetzt, die in der tensidischen Lösung nur schwach löslich sind. Bevorzugt handelt es sich um Entschäumer, die sich von natürlichen Fetten und Ölen, Petroleum-Derivaten oder Siliconölen ableiten. Der Anteil an Entschäumern in der erfindungsgemäßen Dispersion beträgt bevorzugt 0,01 bis 2 Gew.-%, insbesondere 0,05 bis 1 Gew.-%, bezogen auf die Dispersion.

Bei den gegebenenfalls einsetzbaren Stabilisatoren kann es sich um Antioxidantien, Radikalfängern oder UV-Absorbern handeln. Gegebenenfalls können ein oder mehrere dieser Stoffe eingesetzt werden. Der Anteil an diesen Hilfsmitteln in der erfindungsgemäßen Dispersion beträgt bevorzugt 0,1 bis 3 Gew.-%, insbesondere 0,5 bis 2 Gew.-%, bezogen auf die Dispersion.

Als gegebenenfalls zusätzlich enthaltene Fungizide, Bakterizide, Algizide und/oder Insektizide können alle Stoffe eingesetzt werden, die eine antimikrobiell Wirkung im gewünschten Sinne besitzen. Hierbei können gegebenenfalls ein oder mehrere dieser Stoffe eingesetzt werden.

Bei den gegebenenfalls enthaltenen Fungiziden und Bakteriziden handelt es sich bevorzugt um:
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie:
   Ancymidol, Buthiobat, Fenarimol, Mepanipyrin, Nuarimol, Pyroxyfur, Triamirol;
Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie:
   Terbinafin, Naftifin, Butenafin, 3-Chloro-7-(2-aza-2,7,7-trimethyl-oct-3-en-5-in);
Sulfenamide wie:
   Dichlorfluanid, Tolylfluanid, Folpet, Fluorfolpet; Captan, Captofol;
Benzimidazole wie:
   Carbendazim, Benomyl, Fuberidazole, Thiabendazol oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie: 2-Mercaptobenzothiazol;
Benzthiophendioxide wie.Benzo[b]thiophen-S,S-dioxid-carbonsäuarecyclohexylamid,
Benzamide wie: 2,6-Dichloro-N-(4-trifluoromethylbenzyl)-benzamid, Tecloftalam;
Borverbindungen wie: Borsäure, Borsäureester, Borax;
Formaldehyd und Formaldehydabspaltende Verbindungen wie:
   Benzylalkoholmono-(poly)-hemiformal, 1,3-Bis(hydroxymethyl)-5,5-dimethy-limidazolidine-2,4-dione (DMDMH), Bisoxazolidine, n-Butanol-hemiformal, Cis 1-(3-Chlorallyl)-3,5,7-triaza-1-azoniaadamantane chlorid, 1-[1,3-Bis(hydroxymethyl-2,5-dioxoimidazolidin-4-yl]-1,3-bis(hydroxymethyl)urea, Dazomet, Dimethylol-harnstoff, 4,4-Dirnethyl-oxazolidine, Ethylenglycol-hemiformal, 7-Ethyl-bicyclooxazolidine, Hexa-hydra-S-triazine, Hexamethylentetramin, N-Hydroxymethyl-N'-methylthioharnstoff, Methylenbismorpholin, Natrium N-(Hydroxymethyl)glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD);
Isothiazolinone wie:
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Aldehyde wie:
   Zimtaldehyd, Formaldehyd, Glutardialdehyd, β-Bromzimtaldehyd, o-Phthaldialdehyd;
Thiocyanate wie: Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäurcoctylester ,o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie:
   Bronidox, 2-Brom-2-nitro-1,3-propandiol, 2-Brom-4'-hydroxy-acetophenon, 1-Brom-3-chlor-4,4,5,5-tetramethyl-2-imidazoldinone, ß-Brom-ß-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;
Pyridine wie:
   1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2);
Metallseifen wie:
   Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie:
   Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie: Oxide der Metalle Zinn, Kupfer und Zink wie z.B. Tributylzinnoxid, Cu₂O, CuO, ZnO;
Oxidationsmittel wie: Wasserstoffperoxid, Peressigsäure, Kalium-persulfat;
Dithiocarbamate wie:
   Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie: 2,4,5,6-Tetrachlorisophthalodinitril, Dinatrium-cyano-dithioimidocarbamat;
Chinoline wie: 8-Hydroxychinolin und deren Cu-Salze;
sonstige Fungizide und Bakterizide wie:
   Bethoxazin, 5-Hydroxy-2(5H)-furanon; 4,5-Benzdithiazolinon, 4,5-Trianethylendithiazolinon, N-(2-p-Chlorbenzoylethyl)-hexaminiumchlorid, 2-Oxo-2-(4-hydroxy-phenyl)acethydroximsäurechlorid, Tris-N-(cyclohexyldiazeniumdioxy)-aluminium, N-(Cyclo-hexyldiazeniumdioxy)-tributylzinn bzw. K-Salze, Bis-N-(cyclohexyldiazeniumdioxy)-kupfer, Iprovalicarb, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
   Ag, Zn oder Cu-haltige Zeolithe allein oder eingeschlossen in polymere Werkstoffe.
Ganz besonders bevorzugt handelt es sich bei den Fungiziden und Bakteriziden um:
   Azaconazol, Bromuconazol, Cyproconazol, Dichlobutrazol, Diniconazol,, Hexaconazol, Metaconazol, Penconazol, Propiconazol, Tebuconazol, Dichlofluanid, Tolylfluanid, Triadimefon, Fluorfolpet, Methfuroxam, Carboxin, Benzo[b]thiophen-S,S-dioxid-carbonsäurecyclohexylamid, Fenpiclonil, 4-(2,2-Difluoro-1,3-banzodioxol-4-yl)-1H-pyrrol-3-carbonitril, Butenafin, Imazalil, N-Methyl-isothiazolin-3-on, 5-Chlor-N-methylisothiazolin-3-on, N-Octylisothiazolin-3-on, Dichlor-N-octylisozhiazolinon, Mercaptobenzthiazol, Thiocyanatomethylthiobenzothiazol, Thiabendazol, Benzisothiazolinon, N-(2-Hydroxypropyl)-amino-methanol, Benzylalkohol-(hemi)-formal, N-Methylolchloracetamid, N-(2-Hydroxypropyl)-amin-methanol, Glutaraldehyd, Omadine, Zn-Omadine, Dimethyldicarbonat, 2-Brom-2-nitro-1,3-propandiol, Bethoxazin, o-Phthaldialdehyd, 2,2-Dibrom-3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.
Bei den Algiziden handelt es sich bevorzugt um:
   Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
   Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
   Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron,
   Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
   Eglinazin, Endothal, EPTC, Esprocarb, Ethalfluralin, Ethidimuron, Ethofumesat, Ethobenzanid, Ethoxyfen, Ethametsulfuron, Ethoxysulfuron,
   Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
   Glyphosate, Glufosinate-ammonium
   Haloxyfop, Hexazinon,
   Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
   Ketospiradox,
   Lactofen, Lenacil, Linuron,
   MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
   Naproanilid, Napropamid, Naptalam, Neburon, Nicosulfuron, Norflurazon, Natriumchlorat,
   Oxadiazon, Oxyfluorfen, Oxysulfuron, Orbencarb, Oryzalin, Oxadiargyl,
   Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
   Quinmerac, Quinocloamine, Quizalofop, Quizalofop-P, Quinchlorac,
   Rimsulfuron
   Sethoxydim, Sifuron, Simazine, Simetryn, Sulfosulfuron, Sulfometuron, Sulfentrazone, Sulcotrione, Sulfosate,
   Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
   Vernolat.

Ganz besonders bevorzugt handelt es sich bei den Algiziden um Triazinverbindungen, wie beispielsweise Terbutryn, Cybutryn, Propazin oder Terbuton, um Harnstoffverbindungen, wie beispielsweise Diuron, Benzthiazuron, Methabenzthiazuron, Tebuthiuron, und Isoproturon, oder um Uracile wie beispielsweise Terbacil.

Im Allgemeinen beträgt das Verhältnis von Iodpropargylverbindung zu den gegebenenfalls zusätzlichen Wirkstoffen 50:1 bis 1:50, vorzugsweise 20:1 bis 1:20, insbesondere 10:1 bis 1:10.

Sollten die Dispersionen kein Bakterizid als zusätzlichen Wirkstoff enthalten, ist es vorteilhaft sie gegen den Befall durch Bakterien zu schützen. Dieses wird dadurch erreicht, dass man einen oder mehrere der oben genannten bakteriziden Wirkstoffe zusetzt. Die Menge der Bakterizide lediglich zu Stabilisierung der Dispersion beträgt im Allgemeinen 0,0005 bis 2 Gew.%, vorzugsweise 0,001 bis 1 Gew.%, insbesondere 0,005 bis 0,5 Gew.% bezogen auf die Gesamtdispersion.

Bevorzugte Dispersionen enthalten neben IPBC und den oben beschriebenen Block- und/oder Blockcopolymeren, Verdickungsmittel, vorzugsweise solche aus der Klasse der Polysaccharide, wie Xanthan Gum und vorzugsweise Benetzungsmittel wie beispielsweise Polyethylenglycol, Triethylenglycol oder Tetraethylenglycol. Zusätzlich erhält die bevorzugte Dispersion gegebenenfalls nicht-ionogene und anionische Emulgatoren, wie Polyoxyethylen-Fettsäureester, Polyoxyethylen-Fettalkoholether, Alkylarylpolyglycolether, Alkylsulfonate, Alkylsulfate, Arylsulfonate, gegebenenfalls Entschäumer, die sich von Silikonöl- oder Mineralöl ableiten, wenn nötig bakterizid wirkende Konservierungsmittel, gegebenenfalls Stabilisatoren aus der Klasse der Oxidationsinhibitoren, Radikalfängern und UV-Absorbern und als zusätzliche Wirkstoffe Fungizide wie beispielsweise Octylisothiazolinon, Dichloroctylisothiazolinon, Zn-Omadine, Thiabendazole, Bethoxazin, Propiconazole, Tebuconazole, Triadimefon, Carbendazim, Chlorthalonil, Imazalil, Mercaptobenthiazol und/oder Algizide wie Terbutryn, Cybutryn, Isoproturon, Diuron.

Die Erfindung betrifft weiterhin die Verwendung der erfindungsgemäßen Dispersionen als mikrobiozides Mittel zum Schutz von technischen Materialien. Als technische Materialien kommen insbesondere Klebstoffe, Leime, Papier, Karton, Leder, Holz, Holzwerkstoffe, Holz-Plastik-Verbundstoffe, Anstrichmittel, Kühlschmiermittel und Wärmeüberleitungsflüssigkeiten in Frage. Ganz besonders bevorzugt sind Anstrichmittel, Holz und Holzwerkstoffe.

Die Erfindung betrifft außerdem ein Verfahren zum Schutz von technischen Materialien vor Befall und/oder Zerstörung durch Mikroorganismen, das dadurch gekennzeichnet ist, dass man die erfindungsgemäße Dispersion auf den Mikroorganismus oder dessen Lebensraum einwirken lässt. Die Anwendungsmenge der erfindungsgemäßen Dispersion richtet sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im Allgemeinen werden 0,001 bis 5 Gew.-% der erfindungsgemäßen Dispersion, vorzugsweise von 0,05 bis 2,0 Gew.-%, bezogen auf das zu schützende Material, eingesetzt.

### Beispiele

Allgemeine Vorschrift zur Herstellung der in Tabelle 1 genannten Dispersionen:
Das Wasser wird vorgelegt und unter Rühren die angegebene Menge Formulierhilfsmittel/Tensid und Entschäumer zugegeben. Anschließend gibt man die angegebene Menge an Iodpropargylverbindung und gegebenenfalls weiteren Wirkstoffe zu und rührt ca. 30 Minuten bei gleichzeitigem Einsatz eines Zackendissolvers (650 U/min) und eines Ultraturrax (13000 U/min) bis die Vordispersion homogen ist.

Diese Vordispersion wird anschließend einmal über eine Perlmühle (Glaskugeln 1,0 bis 1,2 mm Durchmesser) gemahlen, wobei die Mahltemperatur unter 40 °C gehalten wird. Anschließend wird die gegebenenfalls eine bestimmte Menge einer an 3 %igen wässrigen Xanthan Gum Lösung sowie ggf. weiteres Konservierungsmittel (Preventol D6 entspricht einer wässrigen Lösung von 0,7 % Isothiazolinonen und ca. 23 % O-Formal) zugegeben und mit einem Flügelblattrührer solange gerührt bis die Dispersion homogen ist. Die Viskosität wurde bestimmt mit einem Rotationsviskosimeter und die angegebene Viskosität bezieht sich auf eine Scherkraft von 30 1/s.

Die erhaltenen Dispersionen wurden bei Raumtemperatur und 40 °C gelagert und die Aufrührbarkeit und Viskosität in regelmäßigen Abständen geprüft.

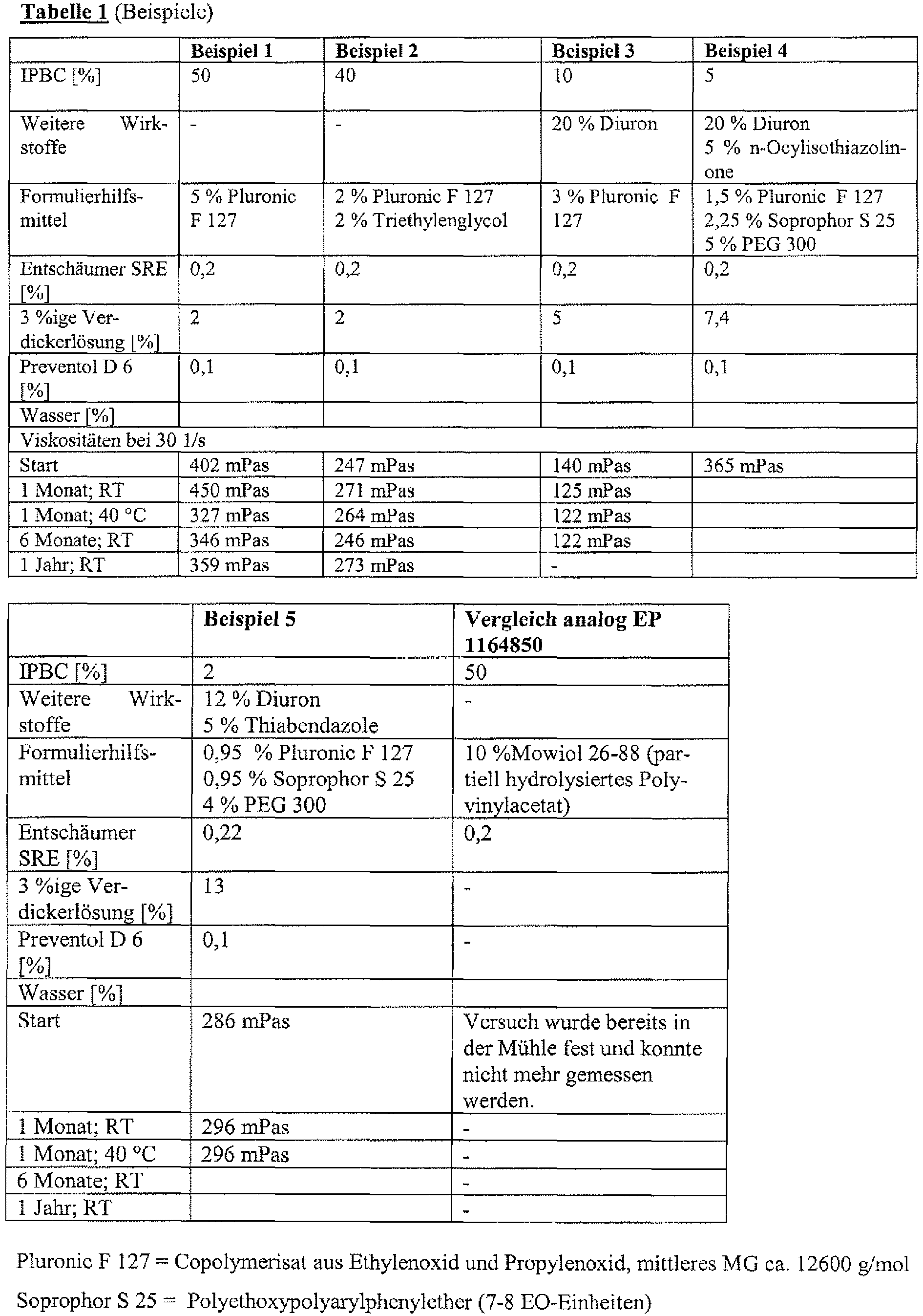

## Patentansprüche

1. Wässrige Dispersion, **dadurch gekennzeichnet, dass** sie
- 1 bis 60 Gew.-% einer Iodpropargylverbindung und
- 0,5 bis 10 Gew.-% wenigstens eines Block- und/oder Blockcopolymeren auf Basis von Ethylen- und/oder Propylenoxid, mit einem zahlenmäßig bestimmten mittleren Molekulargewicht größer 4000 g/mol bis 30000 g/mol aufweist,

2. Dispersion gemäß Anspruch 1, **dadurch gekennzeichnet, dass** wenigstens ein Block- und/oder Blockcopolymer auf Basis von Ethylen- und/oder Propylenoxid mit einem zahlenmäßig bestimmten mittleren Molekulargewicht von größer 4000 bis 14000 Masseneinheiten eingesetzt wird.

3. Dispersion gemäß Anspruch 1, **dadurch gekennzeichnet, dass** sie eine Viskosität bei 20 °C von 50 bis 1000 mPas, vorzugsweise 100 bis 700 mPas, insbesondere von 100 bis 600 mPas, gemessen bei einer angelegten Scherkraft von 30 s⁻¹, aufweist.

4. Dispersion gemäß Anspruch 1, **dadurch gekennzeichnet, dass** sie einen volatile organic content (VOC) von kleiner 5 Gew.-%, insbesondere kleiner 1 Gew.-% besitzt.

5. Dispersion gemäß Anspruch 1, **dadurch gekennzeichnet, dass** sie einen Anteil eines teilhydrolysierten Polyvinylalkohols von kleiner 1 Gew.-%, insbesondere kleiner 0,5 Gew.-%, bezogen auf die Dispersion, enthält.

6. Dispersion gemäß Anspruch 1, **dadurch gekennzeichnet, dass** als Iodpropagylverbindung 3-Iod-2-propinyl-butyl carbamat (IPBC) eingesetzt wird.

7. Dispersion gemäß Anspruch 1, **dadurch gekennzeichnet, dass** sie zusätzlich ein Verdickungsmittel enthält.

8. Dispersion gemäß Anspruch 1, **dadurch gekennzeichnet, dass** sie dass mindestens eine weitere antimikrobiell wirksame Verbindung aus der Reihe der Fungizide, Bakterizide, Herbizide und/oder Insektizide enthält.

9. Verwendung einer Dispersion gemäß Anspruch 1 als mikrobiozides Mittel zum Schutz von technischen Materialien.

10. Verwendung gemäß Anspruch 9, **dadurch gekennzeichnet, dass** es sich bei den technischen Materialien um Klebestoffe, Leime, Papier, Karton, Leder, Holz, Holzwerkstoffe, Holz-Plastik-Verbundstoffe, Anstrichmittel, Kühlschmiermittel und Wärmeüberleitungsflüssigkeiten handelt.

11. Verfahren zum Schutz von technischen Materialien vor Befall und/oder Zerstörung durch Mikroorganismen, **dadurch gekennzeichnet, dass** man mindestens eine Dispersion gemäß Anspruch 1 auf den Mikroorganismus oder dessen Lebensraum einwirken lässt.

## Claims

1. Aqueous dispersion, **characterized in that** it includes
- from 1 to 60% by weight of an iodopropargyl compound and
- from 0.5 to 10% by weight of at least one block copolymer and/or block copolymers based on ethylene oxide and/or propylene oxide, having a numerically determined average molecular weight greater than 4000 g/mol to 30 000 g/mol.

2. Dispersion according to Claim 1, **characterized in that** at least one block copolymer and/or block copolymers based on ethylene oxide and/or propylene oxide, having a numerically determined average molecular weight greater than 4000 to 14 000 mass units, is used.

3. Dispersion according to Claim 1, **characterized in that** it has a viscosity at 20°C of from 50 to 1000 mPa·s, preferably 100 to 700 mPa·s, in particular from 100 to 600 mPa·s, measured at an applied shear force of 30 s⁻¹.

4. Dispersion according to Claim 1, **characterized in that** it has a volatile organic content (VOC) of less than 5% by weight, in particular less than 1% by weight.

5. Dispersion according to Claim 1, **characterized in that** it contains a proportion of partly hydrolyzed polyvinyl alcohol of less than 1% by weight, in particular less than 0.5% by weight, based on the dispersion.

6. Dispersion according to Claim 1, **characterized in that** 3-iodo-2-propynyl butylcarbamate (IPBC) is used as the iodopropargyl compound.

7. Dispersion according to Claim 1, **characterized in that** it additionally contains a thickener.

8. Dispersion according to Claim 1, **characterized in that** it contains at least one further antimicrobially active compound from the series consisting of the fungicides, bactericides, herbicides and/or insecticides.

9. Use of a dispersion according to Claim 1 as a microbicidal composition for protecting industrial materials.

10. Use according to Claim 9, **characterized in that** the industrial materials are adhesives, glues, paper, cardboard, leather, wood, wood-based materials, wood-plastic composites, paints, cooling lubricants and heat-transfer liquids.

11. Process for protecting industrial materials from attack and/or destruction by microorganisms, **characterized in that** at least one dispersion according to Claim 1 is allowed to act on the microorganism or its habitat.

## Revendications

1. Dispersion aqueuse, **caractérisée en ce qu'**elle comprend :
- 1 à 60 % en poids d'un composé d'iodopropargyle et
- 0,5 à 10 % en poids d'au moins un copolymère séquencé à base d'oxyde d'éthylène et/ou de propylène, ayant un poids moléculaire moyen déterminé en nombre de plus de 4 000 g/mol à 30 000 g/mol.

2. Dispersion selon la revendication 1, **caractérisée en ce qu'**au moins un copolymère séquencé à base d'oxyde d'éthylène et/ou de propylène ayant un poids moléculaire moyen déterminé en nombre de plus de 4 000 à 14 000 unités de masse est utilisé.

3. Dispersion selon la revendication 1, **caractérisée en ce qu'**elle présente une viscosité à 20 °C de 50 à 1 000 mPas, de préférence de 100 à 700 mPas, notamment de 100 à 600 mPas, mesurée à une force de cisaillement appliquée de 30 s⁻¹.

4. Dispersion selon la revendication 1, **caractérisée en ce qu'**elle présente une teneur en composés organiques volatils (COV) de moins de 5 % en poids, notamment de moins de 1 % en poids.

5. Dispersion selon la revendication 1, **caractérisée en ce qu'**elle contient une proportion d'alcool polyvinylique partiellement hydrolysé de moins de 1 % en poids, notamment de moins de 0,5 % en poids, par rapport à la dispersion.

6. Dispersion selon la revendication 1, **caractérisée en ce que** du carbamate de 3-iodo-2-propinyl-butyle (IPBC) est utilisé en tant que composé d'iodopropargyle.

7. Dispersion selon la revendication 1, **caractérisée en ce qu'**elle contient en outre un épaississant.

8. Dispersion selon la revendication 1, **caractérisée en ce qu'**elle contient au moins un autre composé à effet antimicrobien de la série constituée par les fongicides, les bactéricides, les herbicides et/ou les insecticides.

9. Utilisation d'une dispersion selon la revendication 1 en tant qu'agent microbicide pour la protection de matériaux techniques.

10. Utilisation selon la revendication 9, **caractérisée en ce que** les matériaux techniques sont des adhésifs, des colles, du papier, du carton, du cuir, du bois, des matériaux à base de bois, des composites bois-plastique, des peintures, des lubrifiants réfrigérants et des liquides de transfert de chaleur.

11. Procédé de protection de matériaux techniques contre une infestation et/ou une destruction par des microorganismes, **caractérisé en ce qu'**au moins une dispersion selon la revendication 1 est laissée agir sur les microorganismes ou leur habitat.
